# EUROPÄISCHE PATENTSCHRIFT

(11) **EP 1 071 593 B1**
(45) Veröffentlichungstag und Bekanntmachung des Hinweises auf die Patenterteilung: **13.04.2005**
(21) Anmeldenummer: 99960867.2
(22) Anmeldetag: 06.11.1999
(51) Int. Cl.: B60S 1/52

(54) **SCHEIBENWISCHER**
WINDSHIELD WIPER
ESSUIE-GLACE

(30) Priorität: 23.02.1999 DE 19907630
(43) Veröffentlichungstag der Anmeldung: 31.01.2001
(73) Patentinhaber: ROBERT BOSCH GMBH, 70442 Stuttgart (DE)
(72) Erfinder: ZIMMER, Joachim, D-77880 Sasbach (DE); WEGNER, Norbert, D-77815 Buehl (DE)
(86) Internationale Anmeldenummer: PCT/DE1999/003555
(87) Internationale Veröffentlichungsnummer: WO 2000/050277

(56) Entgegenhaltungen:
- EP-A- 0 667 267
- EP-A- 1 071 592
- WO-A-90/10561
- GB-A- 2 121 681

## Beschreibung

### Stand der Technik

Die Erfindung geht von einem Scheibenwischer nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts, der von zwei Seitenwangen eines Mittelbügels gebildet wird, und umfaßt einen Gelenkbolzen. Das so gebildete Gelenk führt das Wischblatt während der Schwenkbewegung über die Fahrzeugscheibe. Das Wischblatt besitzt ein in der Regel mehrgliederiges Tragbügelsystem mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Zu diesem Zweck spannt eine Zugfeder das Abklappgelenk vor. Der Wischarm ist mit seinem Befestigungsteil auf einer Antriebswelle befestigt und wird bei der Wischbewegung von dieser angetrieben.

Solche Scheibenwischer sind z.B. aus der DE 37 44 237 A1 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Scheibenwaschanlagen für Fahrzeuge werden in der Regel in Verbindung mit Scheibenwischern verwendet. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter über Wasserleitungen zu den Spritzdüsen fördert. In der Regel sind die Spritzdüsen an einem Teil einer Fahrzeugkarosserie befestigt, beispielsweise an einer Motorhaube, einem Fensterrahmen oder dgl. Um zu verhindern, daß die Spritzdüsen bei Temperaturen unter dem Gefrierpunkt einfrieren, sind in den Spritzdüsen Heizelemente integriert, die über außen liegende Stecker mit einer Stromversorgung verbunden sind. Die Heizelemente erfordern einen relativ hohen Fertigungsaufwand für die Spritzdüsen und einen großen Montageaufwand, um die elektrischen Leitungen zu verlegen und die Stecker zu kontaktieren.

Es ist bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert. Ein Nachteil solcher Systeme ist, daß Witterungseinflüsse, insbesondere Hagel und extreme Sonneneinwirkung die flexiblen Teile dieser Anordnung, die zum Überbrücken der gelenkigen Bereiche zwischen Wischarm und Wischblatt notwendig sind, stark beeinflussen. Ferner frieren die Spritzdüsen und Wasserleitungen, die dem Fahrtwind ausgesetzt sind, bei Temperaturen unter dem Gefrierpunkt schnell zu, wenn nicht genügend Antigefriermittel dem Wasser zugemischt ist. Die eingefrorenen Wasserleitungen und Spritzdüsen sind in der Regel nur mit großem Aufwand wieder aufzutauen.

In einer älteren Patentanmeldung, DE 198 15 171.3, ist ein Wischarm beschrieben, an dessen Gelenkteil bzw. an einer mit dem Gelenkteil einstückig verbundenen Wischstange Spritzdüsen angeordnet sind. Diese befinden sich in einem Düsenkörper, der in einer Ausbuchtung des Gelenkteils mit einer Spritzöffnung für den Spritzstrahl untergebracht oder in einer seitlichen Halterung an der Wischstange nach unten vorstehend eingeklipst ist. Es können auch zwei Düsenkörper vorgesehen werden, die durch ein starres oder flexibles Verbindungsstück miteinander verbunden sind. Die Düsenkörper sind leicht austauschbar und gegenüber Umwelteinflüssen gut geschützt.

In die Scheibenwaschanlage ist eine Heizeinrichtung integriert, die drahtförmig durch eine Wasserzuführung geführt und im Düsenkörper als Heizwendel ausgebildet ist. Die Heizeinrichtung paßt nur für einen Typ von Scheibenwischern, so daß eine große Anzahl von verschiedenen Heizeinrichtungen vorrätig gehalten werden müssen. Im übrigen ergeben sich einfache Lösungen, indem die Düsenkörper einstückig miteinander verbunden und als Spritzgußteil aus Kunststoff hergestellt sind. Durch die am Wischarm verteilten Düsenkörper wird das Spritzwasser gut über den Wischbereich verteilt, insbesondere wenn ein Spritzstrahl in einen unteren Bereich direkt vor das Wischblatt gelenkt wird. Da sich durch die Anordnung kurze Strahllängen ergeben, kann der Fahrtwind selbst bei höherer Fahrgeschwindigkeit die Spritzwasserverteilung nur wenig beeinflussen.

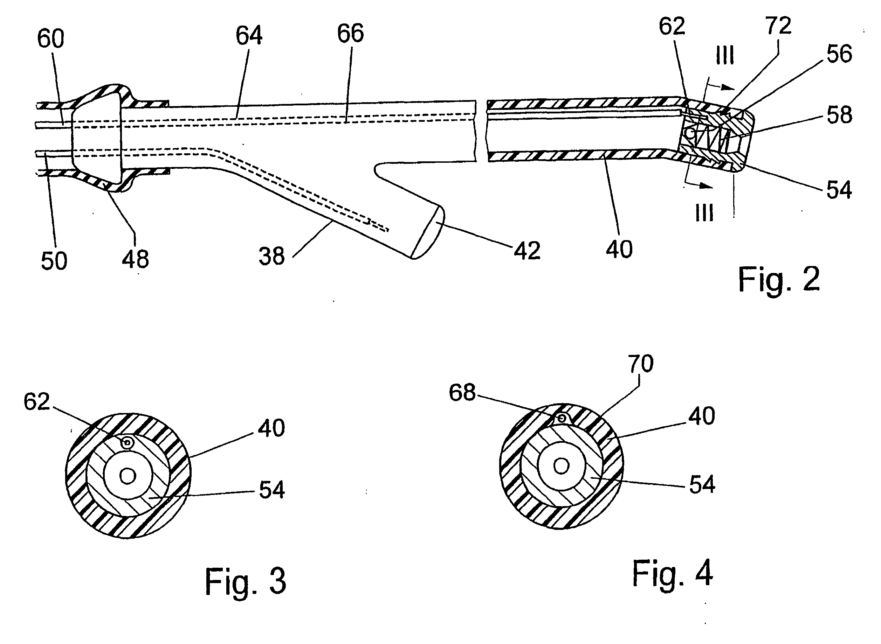

Die GB-A-2 121 681 zeigt einen gattungsgemäßen Scheibenwischer, bei der durch die Wasserleitung eine elektrische, drahtförmige Widerstandsleitung geführt ist, die zwei stromleitende Adern aufweist, die an einem Ende elektrisch miteinander verbunden sind. Bei der Ausführung nach Fig. 4 ist eine der Strom leitenden Adern isoliert, während die andere als Heizelement das Spritzwasser unmittelbar aufwärmt. Die Wasserleitung mit dem Heizdraht führt bis in die Nähe einer Spritzdüse, die über das erwärmte Wasser ebenfalls erwärmt wird. Auf Grund der exponierten Lage der Spritzdüse kann es bei Frost dazukommen, dass die Düse, wenn die Wischanlage nicht benutzt wird, z.B. bei Stillstand des Fahrzeugs, einfriert und anschließend durch das erwärmte Wasser nicht oder nur sehr langsam aufgetaut werden kann.

### Vorteile der Erfindung

Nach der Erfindung ist durch die Wasserleitung zu den Spritzdüsen eine elektrische, drahtförmige Widerstandsheizleitung geführt, die zwei isolierte, stromleitende Adern aufweist.
Diese sind an einem Ende an einer elektrischen Stromversorgung angeschlossen, während sie an ihrem anderen Ende miteinander verbunden sind und mit der Spritzdüse, die aus einem wärmeleitfähigen Werkstoff hergestellt ist, eine Kontaktstelle mit einem guten Wärmeübergang bilden. Die Wärme wird einerseits von der Heizleitung auf das Wasser in der Wasserleitung und andererseits über die Kontaktstelle auf die wärmeleitfähige Spritzdüse übertragen. Das Heizelement für die Spritzdüse und die Wasserleitung ist gleich und kann in einfacher Weise den baulichen Gegebenheiten angepaßt werden. Die Heizleitung erfordert keinen zusätzlichen Bauraum und stört nicht den optischen Eindruck. Das erwärmte Wasser verbessert die Reinigungswirkung, so daß der Wasserverbrauch und insbesondere der Verbrauch von umweltschädlichen Zusätzen verringert werden kann. Schließlich ist die Montage sehr einfach, da kein äußerer Steckeranschluß an der Düse erforderlich ist und nur geringe Kosten für die elektrische Kontaktierung anfallen, weil die elektrische Versorgung nur über einen Stekker an der wasserversorgung erfolgt.

Um den Wärmeübergang an der Kontaktstelle zu verbessern, ist es zweckmäßig, die Isolierung der stromleitenden Adern im Bereich der Kontaktstelle zu entfernen, so daß die Adern blank an der Spritzdüse aus leitfähigem Werkstoff anliegen. Die Kontaktstelle kann als Bohrung in der Spritzdüse ausgebildet sein, in die die Heizleitung eingesetzt ist. Dabei können die Enden der Adern durch eine übliche Steckverbindung gehalten oder eingelötet sein. Eine besonders vorteilhafte Lösung erhält man, wenn die Spritzdüse in einem Düsenkörper eingesetzt ist. In diesem Fall kann die Kontaktstelle dadurch gebildet werden, daß die Heizleitung in einem Fügespalt zwischen dem Düsenkörper und der Spritzdüse geklemmt, verstemmt und/oder geklebt ist. Wird der Düsenkörper aus Metall hergestellt, ergibt sich eine besonders gute Wärmeübertragung vom Heizdraht auf den Bereich der Spritzdüse. Zweckmäßigerweise wird der Düsenkörper aus Kunststoff hergestellt. Dadurch ergibt sich eine Wärmeisolierung nach außen, so daß sich die Wärmeabgabe insbesondere auf die Spritzdüse und das Wasser konzentriert. Dies führt zu einem geringeren Energieverbrauch.

Der Fügespalt ist im Bereich der Kontaktstelle erweitert, um die Abdichtung nach außen sicherzustellen. Diese wird üblicherweise durch einen Preßsitz zwischen der Spritzdüse und dem Düsenkörper hergestellt. Sie kann durch eine Rast- und Dichtvorrichtung verbessert werden, die die Spritzdüse im Düsenkörper hält. Die Spritzdüse wird beim Montieren in den Düsenkörper eingeklipst, wobei gleichzeitig an der Kontaktstelle der elektrische und thermische Kontakt zu der Heizleitung hergestellt wird.

Zweckmäßigerweise hat die Spritzdüse ein nach außen hin öffnendes Rückschlagventil, das verhindert, daß die Wasserleitung sich bei längerer Nichtbenutzung der Waschanlage entleert. Ist die Wasserleitung nur teilweise gefüllt, ist der Wärmeübergang zum Wasser gestört. Ferner können Wasserreste örtlich überhitzt werden und verdampfen. Dadurch entstehen Kalkablagerungen, die im Laufe der Zeit die engen Kanäle in der Spritzdüse zusetzen.

Die Reinigungswirkung kann durch mehrere Spritzdüsen verbessert werden, die am Wischarm in einem Abstand von einigen Zentimetern zueinander angeordnet sind. Um die Montage zu erleichtern, sind die Düsenkörper der einzelnen Spritzdüsen einstückig miteinander verbunden und an die Wasserleitung angeschlossen. Ferner führen zu den einzelnen Spritzdüsen getrennte Heizleitungen, damit alle Wasserkanäle und Spritzdüsen bei Temperaturen unter dem Gefrierpunkt nicht einfrieren.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Scheibenwischers in einer abgeklappten Position,
- Fig. 2: einen teilweisen Längsschnitt durch eine Spritzdüsenanordnung mit zwei Spritzdüsen,
- Fig. 3: einen Schnitt entsprechend der Linie III-III in Fig. 2 und
- Fig. 4: eine Alternative zu Fig. 3.

### Beschreibung der Ausführungsbeispiele

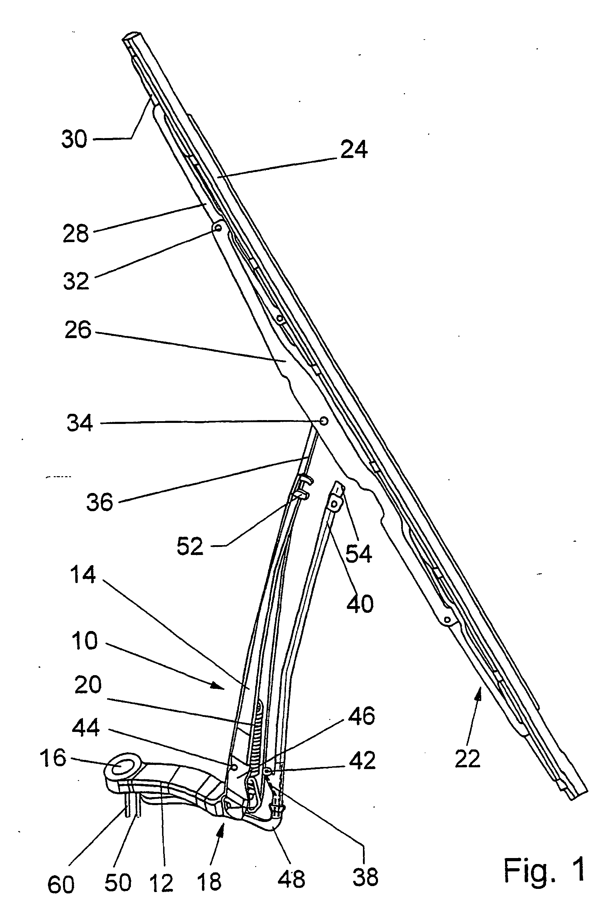

Der Scheibenwischer nach Fig. 1 besitzt einen Wischarm 10, der aus einem Befestigungsteil 12 und aus einem Gelenkteil 14 mit einer Wischstange 36 aufgebaut ist. Das Befestigungsteil 12 besitzt eine Aufnahmebohrung 16, mit der es auf einer nicht dargestellten Antriebswelle befestigt ist. Das Gelenkteil 14 ist über ein Abklappgelenk 18 an dem Befestigungsteil 12 angelenkt, das über eine am Befestigungsteil 12 und am Gelenkteil 14 angreifende Zugfeder 20 vorgespannt ist. Die Zugfeder 20 drückt somit einerseits das Wischblatt 22 über den Wischarm 10 gegen eine Fahrzeugscheibe und hält andererseits das Gelenkteil 14 mit der Wischstange 36, wie dargestellt, in einer abgeklappten Stellung, um das Wischblatt 22 reinigen oder wechseln zu können.

Das Wischblatt 22 besitzt einen Mittelbügel 26, Zwischenbügel 28 und Krallenbügel 30, die eine Wischleiste 24 halten. Die genannten Bügel 26, 28 und 30 sind gelenkig über Gelenkstifte 32 miteinander verbunden, so daß sich die Wischleiste 24 einer Krümmung einer Fahrzeugscheibe anpassen kann. Die Wischstange 36, die zweckmäßigerweise einstückig an das Gelenkteil 14 angeformt ist, umfaßt mit einem Ende einen Gelenkbolzen 34 im Mittelbügel 26 und bildet so mit diesem ein Gelenk.

Das Gelenkteil 14 und die angeformte Wischstange 36 haben ein offenes u-förmiges Profil, in das von unten ein Düsenkörper 38 mit einer eingelassenen Spritzdüse 42 eingesetzt ist. Der Düsenkörper 38 ist im Bereich der Zugfeder 20 in einer Ausbuchtung 46 angeordnet, die eine Spritzöffnung 44 für die Spritzdüse 42 hat. Mindestens ein weiterer Düsenkörper 40 mit einer Spritzdüse 54 ist mit Abstand zum Düsenkörper 38 im Bereich der Wischstange 36 in eine Halterung 52 an dem Ende eingeklipst, das dem Gelenkbolzen 34 nahe liegt. Die Düsenkörper 38, 40 sind flexibel oder starr miteinander verbunden und zweckmäßigerweise einstückig ausgebildet. Sie können leicht als Spritzgußteile aus Kunststoff hergestellt werden. Ferner sind sie einfach zu ersetzen oder nachzurüsten und erlauben ein Vorjustieren der Spritzdüsen.

Die Düsenkörper 38, 40 sind an einer Wasserleitung 48 angeschlossen. Durch diese sind zwei Heizleitungen 50, 60 jeweils bis zur Spritzdüse 42 bzw. 54 geführt. Die Heizleitungen 50, 60 haben zwei isolierte, stromleitende Adern 64, 66, die einen erhöhten Leitungswiderstand aufweisen und an ihren Enden mit den Spritzdüsen 42, 54 Kontaktstellen 62, 68 bilden. Die Spritzdüsen 42, 54 bestehen aus einem gut wärmeleitenden Werkstoff, z.B. einem Metall. Dadurch ergibt sich ein guter Wärmeübergang einerseits von der Kontaktstelle 62, 68 auf die Spritzdüse 42, 54 und zum anderen von dem Wasser auf die Spritzdüse 42, 54, das durch die Heizleitung 50, 60 erwärmt ist.

Um den Wärmeübergang an der Kontaktstelle 62, 68 zu verbessern, ist die Isolierung im Bereich der Kontaktstelle 62, 68 von den Heizleitungen 50, 60 entfernt, so daß die Enden der Adern 64, 66 blank sind. Wie Fig. 2 und Fig. 3 zeigen, sind die blanken Enden der Adern 64, 66 an der Kontaktstelle 62 in eine Bohrung der Spritzdüse 54 eingesetzt, z.B. eingelötet, eingesteckt oder eingeklebt. In der Ausführung nach Fig. 4 wird die Kontaktstelle 68 dadurch gebildet, daß die blanken Enden der Adern 64, 66 in einen erweiterten Fügespalt 70 zwischen dem Düsenkörper 40 und der Spritzdüse 54 geklemmt sind. Die Kontaktstelle 68 kann in einfacher Weise bei der Montage der Spritzdüse 54 hergestellt werden, wobei die Länge der Heizleitung 50, 60 den baulichen Gegebenheiten angepaßt wird. Ferner wird die Montage erleichtert, indem nach einer Varianten die Spritzdüse 54 in den Düsenkörper 40 eingeklipst wird. Dabei dichtet eine Rast- und Dichtvorrichtung 72, die die Spritzdüse 54 in dem Düsenkörper 40 hält, den Fügespalt 70 nach außen hin ab. In vielen Fällen reicht es aus, daß die Spritzdüsen 42, 54 in die Düsenkörper 38, 40 eingepreßt werden und den Fügespalt 70 durch einen Preßsitz abdichten.

Die Düsenkörper 38, 40, die zweckmäßigerweise einstückig ausgebildet sind, sind als Spritzgußteile aus Kunststoff hergestellt. Dadurch ist das Wasser in den Düsenkörpern 38 und 40 wärmeisoliert, so daß auch bei niedrigen Temperaturen nur eine geringe Heizleistung erforderlich ist.

Die Spritzdüsen 42, 54, die gleich aufgebaut sind, besitzen ein Rückschlagventil 56, das durch eine Feder 58 belastet ist und nach außen hin öffnet. Somit kann Wasser nur nach außen gelangen, wenn der Druck im Düsenkörper die Kraft der Feder 58 übersteigt und die Spritzdüsen 42, 54 tropfen nicht nach. Ferner wird verhindert, daß die Kanäle in den Düsenkörpern 38, 40 und in der Wasserleitung 48 leerlaufen. Sind die Düsenkörper 38, 40 und die Wasserleitung 48 nur teilweise gefüllt, ist der Wärmeübergang von der Wasserseite auf die Spritzdüsen 42, 54 gestört. Ferner kann das Restwasser örtlich überhitzt werden und verdampfen, wodurch Kalkablagerungen entstehen, die die Spritzdüsen 42, 54 zusetzen.

### Bezugszeichen

- 10: Wischarm
- 12: Befestigungsteil
- 14: Gelenkteil
- 16: Aufnahmebohrung
- 18: Abklappgelenk
- 20: Zugfeder
- 22: Wischblatt
- 24: Wischleiste
- 26: Mittelbügel
- 28: Zwischenbügel
- 30: Krallenbügel
- 32: Gelenkstift
- 34: Gelenkbolzen
- 36: Wischstange
- 38: Düsenkörper
- 40: Düsenkörper
- 42: Spritzdüse
- 44: Spritzöffnung
- 46: Ausbuchtung
- 48: Wasserleitung
- 50: Heizleitung
- 52: Halterung
- 54: Spritzdüse
- 56: Rückschlagventil
- 58: Feder
- 60: Heizleitung
- 62: Kontaktstelle
- 64: Ader
- 66: Ader
- 68: Kontaktstelle
- 70: Fügespalt
- 72: Rast- und Dichtvorrichtung

## Patentansprüche

1. Scheibenwischer mit einem Wischarm (10), der über eine Antriebswelle angetrieben wird und aus einem Befestigungsteil (12) und einem über ein Abklappgelenk (18) daran angelenkten Gelenkteil (14) mit einer Wischstange (36) aufgebaut ist, an der ein Wischblatt (22) angelenkt ist, wobei mindestens eine Spritzdüse (42) an einem schwenkbaren Teil (10, 22) angeordnet ist, die über eine Wasserleitung (48) mit einer Wasserpumpe verbunden ist, wobei durch die Wasserleitung (48) eine elektrische, drahtförmige Widerstandsheizleitung (50, 60) geführt ist, die zwei stromleitende Adern (64, 66) aufweist, die an einem Ende elektrisch miteinander verbunden sind, **dadurch gekennzeichnet, dass** die beiden stromleitende Adern (64, 66) isoliert sind und an dem miteinander verbundenen Ende mit der Spritzdüse (42, 54) aus einem wärmeleitfähigen Werkstoff eine Kontaktstelle (62, 68) mit einem guten Wärmeübergang bilden.

2. Scheibenwischer nach Anspruch 1, **dadurch gekennzeichnet, daß** die Adern (64, 66) im Bereich der Kontaktstelle (62, 68) blank sind.

3. Scheibenwischer nach einem der vorhergehenden Ansprüche, **dadurch gekennzeichnet, daß** mehrere Spritzdüsen (42, 54) an einer Wasserleitung (48) angeschlossen sind, zu denen getrennte Heizleitungen (50, 60) führen.

4. Scheibenwischer nach einem der vorhergehenden Ansprüche, **dadurch gekennzeichnet, daß** die Spritzdüse (42, 54) in einen Düsenkörper (38, 40) eingesetzt ist

5. Scheibenwischer nach Anspruch 4, **dadurch gekennzeichnet, daß** der Düsenkörper (38) aus Kunststoff hergestellt ist.

6. Scheibenwischer nach Anspruch 4 oder 5, **dadurch gekennzeichnet, daß** die Düsenkörper (38, 40) mindestens zweier Spritzdüsen (42, 54) einstückig miteinander verbunden sind.

7. Scheibenwischer nach einem der vorhergehenden Ansprüche, **dadurch gekennzeichnet, daß** die Heizleitung (50, 60) an der Kontaktstelle (68) in eine Bohrung in der Spritzdüse (54) eingesetzt ist.

8. Scheibenwischer nach Anspruch 7, **dadurch gekennzeichnet, daß** die Kontaktstelle (68) durch eine Steckverbindung gebildet ist.

9. Scheibenwischer nach Anspruch 7, **dadurch gekennzeichnet, daß** die Kontaktstelle (68) durch eine Lötverbindung gebildet ist.

10. Scheibenwischer nach einem der Ansprüche 1 bis 6, **dadurch gekennzeichnet, daß** die Heizleitung (60) an der Kontaktstelle (68) in einem Fügespalt (70) zwischen dem Düsenkörper (40) und der Spritzdüse (54) geklemmt ist.

11. Scheibenwischer nach Anspruch 10, **dadurch gekennzeichnet, daß** der Fügespalt (70) im Bereich der Kontaktstelle (68) erweitert ist.

12. Scheibenwischer nach einem der vorhergehenden Ansprüche, **dadurch gekennzeichnet, daß** die Spritzdüse (42, 54) über eine Rast- und Dichtvorrichtung (72) im Düsenkörper (38, 40) gehalten ist.

13. Scheibenwischer nach einem der vorhergehenden Ansprüche, **dadurch gekennzeichnet, daß** die Spritzdüse (42, 54) ein nach außen hin öffnendes Rückschlagventil (56) aufweist.

## Claims

1. Windscreen wiper having a wiper arm (10) which is driven via a drive shaft and is constructed from a fastening part (12) and an articulated part (14), which is coupled thereto via a fold-down joint (18) and has a wiper rod (36) to which a wiper blade (22) is coupled, at least one spray nozzle (42) which is connected to a water pump via a water pipe (48) being arranged on a pivotable part (10, 22), an electric, wire-shaped resistance heating pipe (50, 60) which has two current-conducting wires (64, 66), which are electrically connected to each other at one end, being guided through the water pipe (48), **characterized in that** the two current-conducting wires (64, 66) are insulated and, at the end at which they are connected to each other, form a contact point (62, 68) with the spray nozzle (42, 54), which consists of a heat-conducting material, with a good transfer of heat.

2. Windscreen wiper according to Claim 1, **characterized in that** the wires (64, 66) are bare in the region of the contact point (62, 68).

3. Windscreen wiper according to one of the preceding claims, **characterized in that** a plurality of spray nozzles (42, 54), to which separate heating pipes (50, 60) are guided, are connected to a water pipe (48).

4. Windscreen wiper according to one of the preceding claims, **characterized in that** the spray nozzle (42, 54) is inserted into a nozzle body (38, 40).

5. Windscreen wiper according to Claim 4, **characterized in that** the nozzle body (38) is produced from plastic.

6. Windscreen wiper according to Claim 4 or 5, **characterized in that** the nozzle bodies (38, 40) of at least two spray nozzles (42, 54) are connected integrally to each other.

7. Windscreen wiper according to one of the preceding claims, **characterized in that** the heating pipe (50, 60) is inserted at the contact point (68) into a hole in the spray nozzle (54).

8. Windscreen wiper according to Claim 7, **characterized in that** the contact point (68) is formed by a plug-in connection.

9. Windscreen wiper according to Claim 7, **characterized in that** the contact point (68) is formed by a soldered connection.

10. Windscreen wiper according to one of Claims 1 to 6, **characterized in that** the heating pipe (60) is clamped at the contact point (68) into a joining gap (70) between the nozzle body (40) and the spray nozzle (54).

11. Windscreen wiper according to Claim 10, **characterized in that** the joining gap (70) is widened in the region of the contact point (68).

12. Windscreen wiper according to one of the preceding claims, **characterized in that** the spray nozzle (42, 54) is held in the nozzle body (38, 40) via a latching and sealing device (72).

13. Windscreen wiper according to one of the preceding claims, **characterized in that** the spray nozzle (42, 54) has an outwardly opening non-return valve (56).

## Revendications

1. Essuie-glace comprenant un bras d'essuie-glace (10) entraîné au moyen d'un arbre d'entraînement et composé d'une partie de fixation (12) et d'une partie articulée (14) sur celle-ci au moyen d'une articulation rabattable (18) et munie d'une tige d'essuie-glace (36) raccordée à un balai d'essuie-glace (22) avec au moins une buse de pulvérisation (42) montée sur une partie pivotante (10, 22) et reliée à une pompe à eau par une conduite d'eau (48), et avec une ligne chauffante à résistance électrique (50, 60), en forme de câble passant dans la conduite d'eau (48), et comprenant deux fils électro-conducteurs (64, 66) connectés électriquement entre eux à une extrémité,
**caractérisé en ce que**
les deux fils électro-conducteurs (64, 66) sont isolés et forment, à l'extrémité où sont connectés entre eux, une zone de contact (62, 68) possédant une bonne transmission de la chaleur, avec la buse de pulvérisation (42, 54) faite d'une matière conductrice de la chaleur.

2. Essuie-glace selon la revendication 1,
**caractérisé en ce que**
les fils (64, 66) sont dénudés dans la région de la zone de contact (62, 68).

3. Essuie-glace selon une des revendications précédentes,
**caractérisé en ce qu'**
à une conduite d'eau (48) sont raccordées plusieurs buses de pulvérisation (42, 54) auxquelles mènent des lignes chauffantes séparées (50, 60).

4. Essuie-glace selon une des revendications précédentes,
**caractérisé en ce que**
la buse de pulvérisation (42, 54) est encastrée dans un corps de buse (38, 40).

5. Essuie-glace selon la revendication 4,
**caractérisé en ce que**
le corps de buse (38) est fabriqué en matière plastique.

6. Essuie-glace selon la revendication 4 ou 5,
**caractérisé en ce que**
les corps de buses (38, 40) d'au moins deux buses de pulvérisation (42, 44) sont assemblés entre eux en une seule pièce.

7. Essuie-glace selon une des revendications précédentes,
**caractérisé en ce qu'**
à l'endroit de la zone de contact (68), la ligne chauffante (50, 60) est emboîtée dans un perçage formé dans la buse de pulvérisation (54).

8. Essuie-glace selon la revendication 7,
**caractérisé en ce que**
la zone de contact (68) est formée par une connexion à broche.

9. Essuie-glace selon la revendication 7,
**caractérisé en ce que**
la zone de contact (68) est formée par une jonction soudée.

10. Essuie-glace selon une des revendications 1 à 6,
**caractérisé en ce qu'**
à l'endroit de la zone de contact (68), la ligne chauffante (60) est serrée dans une fente de joint (70) entre le corps de buse (40) et la buse de pulvérisation (54).

11. Essuie-glace selon la revendication 10,
**caractérisé en ce que**
la fente de joint (70) est élargie dans la région de la zone de contact (68).

12. Essuie-glace selon une des revendications précédentes,
**caractérisé en ce que**
la buse de pulvérisation (42, 54) est tenue dans le corps de buse (38, 40) au moyen d'un dispositif d'encliquetage et d'étanchéité (72).

13. Essuie-glace selon une des revendications précédentes,
**caractérisé en ce que**
la buse de pulvérisation (42, 54) présente un clapet anti-retour (56) qui s'ouvre vers l'extérieur.
